# EUROPÄISCHE PATENTSCHRIFT

(11) **EP 3 112 835 B1**
(45) Veröffentlichungstag und Bekanntmachung des Hinweises auf die Patenterteilung: **21.10.2020**
(21) Anmeldenummer: 15174436.4
(22) Anmeldetag: 30.06.2015
(51) Int. Cl.: G01M 1/02, G01M 1/16, G01M 1/22, G01M 1/32

(54) **RADAUSWUCHTVORRICHTUNG**
WHEEL BALANCER
DISPOSITIF D'EQUILIBRAGE DE ROUE

(43) Veröffentlichungstag der Anmeldung: 04.01.2017
(73) Patentinhaber: Beissbarth GmbH, 80993 München (DE)
(72) Erfinder: Montanari, Marco, 42015 Correggio (IT)
(74) Vertreter: Schmitt-Nilson Schraud Waibel Wohlfrom Patentanwälte Partnerschaft mbB

(56) Entgegenhaltungen:
- EP-A1- 0 724 144
- EP-A1- 1 512 953
- US-A- 5 189 912
- US-A1- 2002 189 336
- US-A1- 2008 060 425
- US-B1- 6 484 574

## Beschreibung

Die Erfindung betrifft eine Radauswuchtvorrichtung, insbesondere eine Radauswuchtvorrichtung zum Auswuchten von Speichenrädern.

### Stand der Technik

Radauswuchtvorrichtungen werden zum Bestimmen der Positionen und Größen von Auswuchtgewichten eingesetzt, die an einem Rad anzubringen sind, um Unwuchten zu korrigieren.

Ist das auszuwuchtende Rad ein Speichenrad, ist es wünschenswert, die Auswuchtgewichte in Umfangsrichtung des Rades an den Positionen der Speichen, insbesondere hinter den Speichen des Rades anzubringen. Dazu müssen die Positionen der Speichen der Radauswuchtvorrichtung bekannt sein. Um der Radauswuchtvorrichtung die Positionen der Speichen bekannt zu machen, wird die Anzahl der Speichen manuell in die Radauswuchtvorrichtung eingegeben und das Rad manuell so gedreht, dass sich die Speichen des Rades der Reihe nach an einer vorgegebene Referenzposition befinden. Dieser Vorgang ist zeitaufwendig und mühsam.

Eine erfindungsgemäße Radauswuchtvorrichtung gemäß Anspruch 1, die zum Auswuchten von Speichenrädern vorgesehen ist, umfasst eine drehbaren Haltevorrichtung, die ausgebildet ist, ein auszuwuchtendes Rad aufzunehmen und drehbar abzustützen, und wenigstens einen Speichensensor, der ausgebildet ist, die Speichen des Rades zu detektieren. Die Radauswuchtvorrichtung weist zusätzlich einen Winkelsensor und eine Auswertvorrichtung auf. Der Winkelsensor ist ausgebildet, jeweils die aktuelle Winkelposition des Rades zu erfassen, und die Auswertvorrichtung ist ausgebildet, durch Kombinieren von Signalen, die von dem Winkelsensor und von dem Speichensensor geliefert werden, die (Winkel-)Positionen der Speichen entlang des Umfangs des Rades zu bestimmen, während das Speichenrad beschleunigt oder abgebremst wird.

EP 1 512 953 A1 offenbart ein Verfahren und eine Vorrichtung zum optischen Abtasten eines mit ortsfester Achse an einer Messwelle einer Radauswuchtmaschine befestigten Fahrzeugrades mit wenigstens einer Lichtquelle zum Aussenden eines Lichtstrahls auf die Radoberfläche, einem synchron mit der Lichtquelle beweglichen Lichtempfänger zum Empfangen eines von der Radoberfläche reflektierten Lichtstrahls und einer Auswerteeinrichtung, welche an den Empfänger und einen die Positionen der Lichtquelle und des Empfängers angebenden Positionsgebers angeschlossen ist, wobei die Auswerteeinrichtung aus den Richtungen des jeweils ausgesendeten Strahls und des zugeordneten empfangenen Strahls Abmessungen und Positionen von Bestandteilen des Fahrzeugrades rechnergestützt ermittelt.

US 2008/0060425 A1 offenbart ein Verfahren und eine Vorrichtung zum Auswuchten von Speichenrädern durch Anbringen eines Gewichtes hinter einer der Speichen. Dabei werden die Positionen der Speichen durch manuelle Eingabe oder durch ein Verfahren, wie es in EP 1 512 953 A1 beschrieben ist, bekannt gemacht.

US 5,189,912 offenbart eine Auswuchtvorrichtung, bei der die Positionen der Speichen mit Hilfe von Ultraschalldetektoren ermittelt werden.

EP 0 724 144 A1 offenbart eine Auswuchtvorrichtung mit zwei Beleuchtungseinrichtungen, von denen jede bei streifendem Einfall auf dem Rand des Drehkörpers einen im wesentlichen parallelen Strahl lenkt. Das reflektierte Licht wird von Photodetektoren aufgenommen, die es ermöglichen, zwischen dem stark reflektierenden Rand und einen benachbarten abgeschatteten Zone zu unterscheiden. Die Eintrittsfläche jedes Photodetektors ist mit einer Linse ausgerüstet, die das reflektierte Licht auf einen linearen CCD-Sensor fokussiert. Dies ermöglicht es, die Entfernung und die Richtung der reflektierenden Fläche, z.B. durch Triangulation, zu bestimmen.

US 6,484,574 B1 offenbart eine Auswuchtvorrichtung für eine Felgenrand-/Reifenanordnung mit einem Rotationssensor zum Messen der Rotation und mit einem Motor zum Rotieren der Felgenrand-/Reifenanordnung. Eine Steuerschaltung steuert den Motor, damit dieser die Felgenrand-/Reifenanordnung in einer gewünschten Rotationsposition hält. Eine Randmessvorrichtung ist eingerichtet, die Innenfläche der Felgenrand-/Reifenanordnung abzutasten. Von der Steuerschaltung werden die optimalen Positionen in der Ebene, Größen von Korrekturgewichten und die Anzahl an Korrekturgewichten berechnet, um die verbleibende statische und dynamische Unwucht zu reduzieren. Die Steuerschaltung nutzt den Motorantrieb, um die Felgenrand-/Reifenanordnung zu indizieren und an der zum Anbringen von Korrekturgewichten geeigneten Rotationsposition anzuhalten. Ein Laserstrahl beleuchtet die Oberfläche der Felgenrand-/Reifenanordnung an der axialen Position der Korrekturebene, an der das Korrekturgewicht anzubringen ist.

Auf diese Weise können die (Winkel-)Positionen der Speichen in der Umfangsrichtung des Rades eindeutig bestimmt werden. Dadurch können die (Winkel-)Positionen der Speichen beim Festlegen der Positionen der Auswuchtgewichte derart berücksichtigt werden, dass die Auswuchtgewichte ausschließlich hinter den Speichen des Rades angebracht werden, wo sie von außen nicht sichtbar und vor äußeren mechanischen Einflüssen geschützt sind.

Ein erfindungsgemäßes Verfahren zum Bestimmen der Anzahl und/oder der Positionen der Speichen eines Speichenrades in einer Radauswuchtvorrichtung gemäß Anspruch 1 umfasst die Schritte:
a) Drehen des Speichenrades um seine Achse;
b) Detektieren der Speichen des Rades mit einem Speichensensor während das Speichenrad beschleunigt oder abgebremst wird;
c) Erfassen der aktuellen Winkelposition des Speichenrades mit einem Winkelsensor; und
d) Bestimmen der Positionen der Speichen entlang des Umfangs des Speichenrades mit einer Auswertevorrichtung durch Kombinieren von Signalen, die von dem Winkelsensor und von dem Speichensensor geliefert werden.

Die Erfindung ermöglicht es, die Anzahl und die Positionen der Speichen eines Speichenrades vor und/oder während des Auswuchtvorgangs schnell und bequem zu bestimmen. Auf das bisher notwendige Positionieren der Speichen an einer vorgegebenen Referenzposition durch Drehen des Rades kann verzichtet werden. Im Ergebnis wird das Auswuchten von Speichenrädern deutlich vereinfacht und beschleunigt.

Der Speichensensor kann insbesondere ein berührungsloser Sensor sein, der ausgebildet ist, die Speichen berührungslos zu erkennen. Dadurch werden Beschädigungen und/oder ästhetische Beeinträchtigungen der Speichen durch den Sensor, wie sie bei einem mechanischen Speichensensor auftreten können, zuverlässig vermieden.

Der Speichensensor kann ein akustischer Sensor, insbesondere ein Ultraschallsensor, oder ein optischer Sensor, insbesondere ein Licht-Reflexionssensor, sein. Ein optischer Sensor, der insbesondere als Infrarot- und/oder Lasersensor ausgebildet sein kann, ermöglicht es, die Speichen auch bei hohen Drehzahlen des Speichenrades zuverlässig zu detektieren.

Die Auswertvorrichtung kann ausgebildet sein, die Positionen der Speichen zu bestimmen, während das Rad mit geringer Drehzahl, insbesondere von Hand, um seine Achse gedreht wird. Eine geringe Drehzahl ist insbesondere vorteilhaft, wenn ein Sensor mit geringer Reaktionsgeschwindigkeit, wie z.B. ein akustischer Sensor, als Speichensensor verwendet wird.

### Fiqurenbeschreibunq

Die Erfindung wird im Folgenden anhand der beigefügten Figuren näher erläutert, dabei zeigt:
Fig. 1 eine schematische Ansicht eines Speichenrades; und
Fig. 2 eine schematische Schnittansicht eines Ausführungsbeispiels einer erfindungsgemäßen Radauswuchtvorrichtung

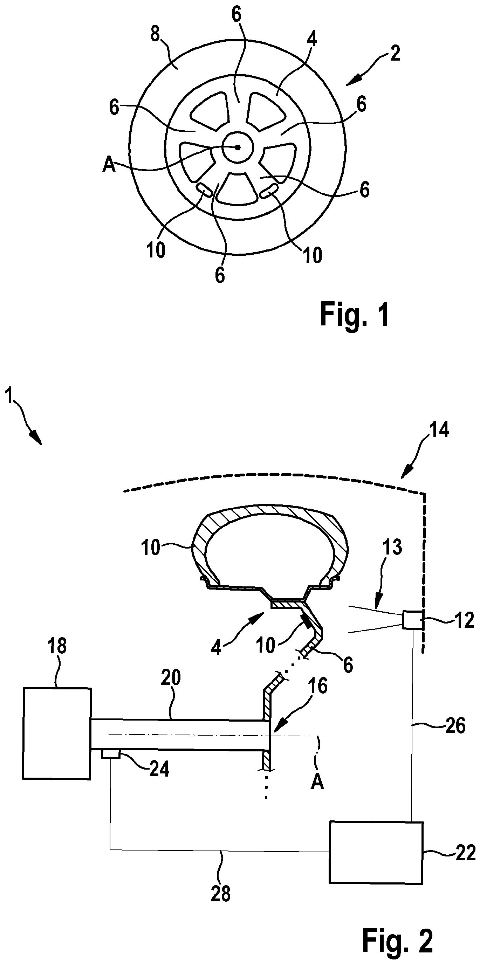

Fig. 1 zeigt eine schematische Ansicht eines um eine Achse A rotationssymmetrischen Speichenrades 2 mit einer Felge 4, die eine Anzahl, im gezeigten Beispiel fünf, Speichen 6 aufweist und einem auf die Felge 4 aufgezogenen Reifen 8.

Auswuchtgewichte 10, die zum Auswuchten des Speichenrades 2 an der Felge 4 angebracht werden, sollen bevorzugt hinter den Speichen 6 der Felge 4 angebracht werden, damit sie von außen nicht sichtbar und vor äußeren mechanischen Einflüssen geschützt sind. Dazu müssen die Positionen der Speichen 6 der Radauswuchtvorrichtung bekannt sein.

Fig. 2 zeigt eine schematische Ansicht eines Ausführungsbeispiels einer erfindungsgemäßen Radauswuchtvorrichtung 1.

Die Radauswuchtvorrichtung 1 umfasst eine drehbare Welle 20, die in der Darstellung der Figur 2 in horizontaler Richtung von links nach recht verläuft, mit einer in der Fig. 2 nur schematisch gezeigte Halterung (Nabe) 16, an der das Speichenrad 2 derart montierbar ist, dass es durch einen Motor 18 oder manuell um die Achse der Welle 20, die mit der Achse A des an der Halterung 16 montierten Rades 2 übereinstimmt, gedreht werden kann.

Die Radauswuchtvorrichtung 1 umfasst darüber hinaus wenigstens einen Speichensensor 12, der ausgebildet ist, zu erkennen, ob sich eine Speiche 6 des Rades 2 im Erfassungsbereich 13 des Speichensensors 12 befindet.

In dem in der Fig. 2 gezeigten Ausführungsbeispiel ist der Speichensensor 12 an einer beweglichen, insbesondere schwenkbaren, Abdeckvorrichtung 14 der Radauswuchtvorrichtung 1 angebracht. Die Abdeckvorrichtung 14 ist vorgesehen, um den Bediener der Radauswuchtvorrichtung 1 davor zu schützen, mit dem sich drehenden Rad 2 in Kontakt zu kommen. Die Abdeckvorrichtung 14 ist dazu vorzugsweise so ausgebildet, dass der Motor 18 nur betrieben werden kann, wenn die Abdeckvorrichtung 14 geschlossen ist und die Abdeckvorrichtung 14 nur geöffnet werden kann, wenn das Rad 2 still steht.

Alternativ kann der Speichensensor 12 auch an einer anderen Stelle der Radauswuchtvorrichtung 1 angebracht sein, die im Betrieb still steht und insbesondere nicht gemeinsam mit dem Rad 2 rotiert.

Der Speichensensor 12 kann insbesondere als berührungsloser Sensor ausgebildet sein, der in der Lage ist, die Speichen 6 berührungslos zu detektieren. Durch eine berührungslose Detektion der Speichen 6 können Beschädigungen und/oder ästhetische Beeinträchtigungen, z.B. Kratzer, der Speichen 6 durch den Speichensensor 12, wie sie bei einem mechanischen Speichensensor 12 auftreten können, zuverlässig vermieden werden.

Der berührungslose Speichensensor 12 kann z.B. ein ein akustischer Sensor, insbesondere ein Ultraschallsensor, oder ein optischer Sensor, insbesondere ein Licht-Reflexionssensor, sein.

Der optische Sensor kann mit Licht im sichtbaren und/oder Licht im unsichtbaren Bereich arbeiten. Ein optischer Sensor, der insbesondere als Infrarot- und/oder Lasersensor ausgebildet sein kann, ermöglicht es, die Speichen 6 auch bei hohen Drehzahlen des Speichenrades 2 zuverlässig zu detektieren.

Der Speichensensor 12 ist über eine Funk- und/oder Kabelverbindung 26 mit einer Auswertvorrichtung 22 verbunden, um die von ihm erzeugten Messsignale an die Auswertvorrichtung 22 zu übertragen. Die Auswertvorrichtung 22 ist darüber hinaus über eine weitere Funk- und/oder Kabelverbindung 28 mit einem Winkelsensor 24 verbunden, der an der drehbaren Welle 20 angeordnet ist, um die aktuelle Winkelposition der Welle 20 und damit auch die Winkelposition des Rades 2 bei der Drehung um die Achse A zu bestimmen. Durch Kombinieren der vom Winkelsensor 18 und von dem Speichensensor 12 gelieferten Signale können die Winkelpositionen der Speichen 6 entlang des Umfangs der Felge 4 eindeutig bestimmt werden.

Sind die Winkelpositionen der Speichen 6 in Richtung des Umfangs der Felge 4 bekannt, können die Positionen, an denen die Auswuchtgewichte 8 anzubringen sind, derart bestimmt werden, dass die Auswuchtgewichte 8 ausschließlich an den Winkelpositionen der Speichen 6, insbesondere hinter den Speichen 6 der Felge 4 montiert werden, wo sie von außen nicht sichtbar sind. Auf diese Weise kann eine ästhetische Beeinträchtigung des Rades 2 durch die Auswuchtgewichte vermieden werden und die Auswuchtgewichte 10 sind durch die Speichen 6 vor äußeren mechanischen Einflüssen geschützt.

## Patentansprüche

1. Radauswuchtvorrichtung (1), zum Auswuchten von Speichenrädern (2), mit:
einer drehbaren Haltevorrichtung, die ausgebildet ist, ein auszuwuchtendes Speichenrad (2) aufzunehmen und drehbar abzustützen,
wenigstens einem Speichensensor (12), der ausgebildet ist, die Speichen (6) des Speichenrades (2) zu detektieren
**dadurch gekennzeichnet, dass** die Radauswuchtvorrichtung (1) zusätzlich einen Winkelsensor (18) und eine Auswertvorrichtung (16) aufweist, wobei der Winkelsensor (18) ausgebildet ist, die aktuelle Winkelposition des Speichenrades (2) zu erfassen, und wobei die Auswertvorrichtung (16) ausgebildet ist,
durch Kombinieren von Signalen, die von dem Winkelsensor (18) und von dem Speichensensor (12) geliefert werden, die Position der Speichen (6) entlang des Umfangs des Speichenrades (2) zu bestimmen, während das Speichenrad (2) beschleunigt oder abgebremst wird.

2. Radauswuchtvorrichtung (1) nach Anspruch 1, wobei der Speichensensor (12) ausgebildet ist, die Anzahl und/oder die Position der Speichen (6) zu erkennen.

3. Radauswuchtvorrichtung (1) nach Anspruch 1 oder 2, wobei der Speichensensor (12) ausgebildet ist, die Speichen (6) berührungslos zu erkennen.

4. Radauswuchtvorrichtung (1) nach Anspruch 3, wobei der Speichensensor (12) ein akustischer Sensor (12), insbesondere ein Ultraschallsensor ist.

5. Radauswuchtvorrichtung (1) nach Anspruch 3, wobei der Speichensensor (12) ein optischer Sensor (12), insbesondere ein Licht-Reflexionssensor ist.

6. Verfahren zum Bestimmen der Anzahl und/oder der Positionen von Speichen (6) eines Speichenrades (2) in einer Radauswuchtvorrichtung (1) gemäß Anspruch 1, wobei das Verfahren umfasst:
a) das Speichenrad (2) um seine Achse zu drehen; und
b) während das Speichenrad (2) beschleunigt oder abgebremst wird, die Speichen (6) des Speichenrades (2) mit einem berührungslosen Speichensensor (12) zu detektieren, mit einem Winkelsensor (18) die aktuelle Winkelpositionen des Speichenrades (2) zu erfassen und mit einer Auswertvorrichtung (16) durch Kombinieren von Signalen, die von dem Winkelsensor (18) und von dem Speichensensor (12) geliefert werden, die Positionen der Speichen (6) entlang des Umfangs des Speichenrades (2) zu bestimmen.

7. Verfahren nach Anspruch 6, wobei das Drehen des Speichenrades (2) im Schritt a) umfasst, das Speichenrad (2) manuell oder motorgetrieben zu drehen.

## Claims

1. A wheel balancing device (1) for balancing spoked wheels (2), comprising:
a rotatable holding device configured to receive and rotatably support a spoked wheel (2) to be balanced;
at least one spoke sensor (12) configured to detect the spokes (6) of the spoked wheel (2),
**characterized in that** the wheel balancing device (1) comprises in addition an angular position sensor (18) and an evaluation device (18), the angular position sensor (18) being configured to detect the current angular position of the spoked wheel (2), and the evaluation device (16) being configured to determine the position of the spokes (6) along the circumference of the spoked wheel (2) by combining signals delivered by the angular position sensor (18) and the spoke sensor (12), while the spoked wheel (2) is accelerated or decelerated.

2. The wheel balancing device (1) according to claim 1,
wherein the spoke sensor (12) is configured to detect the number and/or the position of the spokes (6).

3. The wheel balancing device (1) according to claim 1 or 2,
wherein the spoke sensor (12) is configured to detect the spokes (6) in contactless manner.

4. The wheel balancing device (1) according to claim 3,
wherein the spoke sensor (12) is an acoustic sensor (12), in particular an ultrasonic sensor.

5. The wheel balancing device (1) according to claim 3,
wherein the spoke sensor (12) is an optical sensor (12), in particular a light reflection sensor.

6. A method for determining the number and/or positions of spokes (6) of a spoked wheel (2) in a wheel balancing device (1) according to claim 1, the method comprising:
a) rotating the spoked wheel (2) about its axis; and
b) while the spoked wheel (2) is accelerated or decelerated, detecting the spokes (6) of the spoked wheel (2) by means of a contactless spoke sensor (12), detecting the current angular position of the spoked wheel (2) by means of an angular position sensor (18) and, by means of an evaluation device (16), determining the positions of the spokes (6) along the circumference of the spoked wheel (2) by combining signals delivered by the angular position sensor (18) and the spoke sensor (12).

7. The method according to claim 6,
wherein rotating the spoked wheel (2) in step a) comprises rotating the spoked wheel (2) manually or in motor-driven fashion.

## Revendications

1. Dispositif d'équilibrage de roue (1) permettant d'équilibrer des roues à rayons (2), comprenant :
un dispositif de support rotatif, réalisé de manière à accueillir une roue à rayons (2) à équilibrer et à la soutenir de manière rotative,
au moins un capteur de rayons (12), réalisé de manière à détecter les rayons (6) de la roue à rayons,
**caractérisé en ce que** le dispositif d'équilibrage de roue (1) présente en outre un capteur d'angle (18) et un dispositif d'évaluation (16), le capteur d'angle (18) étant réalisé de manière à saisir la position angulaire actuelle de la roue à rayons (2), et le dispositif d'évaluation (16) étant réalisé de manière à déterminer la position des rayons (6) le long de la circonférence de la roue à rayons (2) en combinant les signaux émis par le capteur d'angle (18) et par le capteur de rayons (12), pendant que la roue à rayons (2) accélère ou est freinée.

2. Dispositif d'équilibrage de roue (1) selon la revendication 1, dans lequel le capteur de rayons (12) est réalisé de manière à reconnaître le nombre et/ou la position des rayons (6).

3. Dispositif d'équilibrage de roue (1) selon la revendication 1 ou 2, dans lequel le capteur de rayons (12) est réalisé de manière à reconnaître les rayons (6) sans contact.

4. Dispositif d'équilibrage de roue (1) selon la revendication 3, dans lequel le capteur de rayons (12) est un capteur acoustique (12), en particulier un capteur à ultrasons.

5. Dispositif d'équilibrage de roue (1) selon la revendication 3, dans lequel le capteur de rayons (12) est un capteur optique (12), en particulier un capteur réfléchissant la lumière.

6. Procédé de détermination du nombre et/ou de la position des rayons (6) d'une roue à rayons (2) dans un dispositif d'équilibrage de roue (1) selon la revendication 1, ce procédé consistant à :
a) faire tourner la roue à rayons (2) autour de son axe ; et,
b) pendant que la roue à rayons (2) accélère ou est freinée, détecter les rayons (6) de la roue à rayons (2) à l'aide d'un capteur de rayons (12) sans contact, saisir la position angulaire actuelle de la roue à rayons (2) à l'aide d'un capteur d'angle (18) et déterminer la position des rayons (6) le long de la circonférence de la roue à rayons (2) en combinant les signaux émis par le capteur d'angle (18) et par le capteur de rayons (12).

7. Procédé selon la revendication 6, dans lequel la rotation de la roue à rayons (2) à l'étape a) consiste à faire tourner la roue à rayons (2) manuellement ou par l'entraînement d'un moteur.
